**Europäisches Patentamt**

**European Patent Office**

**Office européen des brevets**

(11) Publication number: **0 113 137**
**B1**

(12) **EUROPEAN PATENT SPECIFICATION**

(45) Date of publication of patent specification: **08.04.87**

(21) Application number: **83201689.3**

(22) Date of filing: **29.11.83**

(51) Int. Cl.⁴: **C 01 B 33/18, C 01 C 1/16**

(54) Process for the preparation of pure silica.

(30) Priority: **04.12.82 NL 8204704**

(43) Date of publication of application:
**11.07.84 Bulletin 84/28**

(45) Publication of the grant of the patent:
**08.04.87 Bulletin 87/15**

(84) Designated Contracting States:
**BE DE FR GB IT NL**

(56) References cited:
**DE-A-2 121 152**
**US-A-3 271 107**
**US-A-4 026 997**

(73) Proprietor: **STAMICARBON B.V.**
**Mijnweg 1**
**NL-6167 AC Geleen (NL)**

(72) Inventor: **Van Montfoort, Abraham**
**Pieterstraat 53**
**NL-6166 AP Geleen (NL)**
Inventor: **Weterings, Cornelis Antonius Maria**
**Schineksstraat 60**
**NL-6171 AP Stein (L.) (NL)**

(74) Representative: **Hoogstraten, Willem Cornelis**
**Roeland et al**
**OCTROOIBUREAU DSM Postbus 9**
**NL-6160 MA Geleen (NL)**

Courier Press, Leamington Spa, England.

## Description

The invention relates to a process for the preparation of pure silica by conversion of a solution of hexafluorosilicic acid having a concentration of at most 15 wt.-%, with an ammonium hydroxide solution and separation of the silica precipitate thus formed.

Such a conversion is known from, for instance, United States Patents 3,271,107 and 4.026.997. A disadvantage of these known processes is that the silica obtained is severely contaminated. Thus, in particular the metal content is rather high. The product thus obtained therefore is applicable to only few technical purposes, for instance as additive for paint and rubber products.

The invention now provides a process allowing the preparation of a very pure silica on the basis of solutions of hexafluorosilicic acid that may even be strongly contaminated.

According to the invention this is achieved by adding a small amount of an aminopolycarboxylic acid or a salt thereof to the hexafluorosilicic acid before contacting the latter with the ammonium hydroxide solution.

The aminopolycarboxylic acids or salts thereof that can be applied include inter alia ethylene diaminotetra-acetic acid, nitrilotriacetic acid, diethylene triaminopenta-acetic acid or hydroxyethylene-diaminotriacetic acid or the potassium, sodium or lithium salts of these. Particularly suitable were found to be ethylenediaminetetra-acetic acid or alkali metal salts thereto, especially the 1,2-disodium salt.

In the subject process the aminopolycarboxylic acid, respectively the salts thereof, may be added in the form of an aqueous solution, for instance as a 1—10 wt.-% solution. It is, however, preferred to add a solid aminopolycarboxylic acid or salt thereof, so that dilution of the reaction medium is avoided.

The amount of aminopolycarboxylic acid or salt thereof that is to be added may vary within wide limits but is, of course, determined by the degree of which the hexafluorosilicic acid used is contaminated. In general an amount is applied that stoichiometrically is at least equal to the amount of multivalent metals present in the hexafluorosilicic acid. By preference the aminopolycarboxylic acid or salt thereof is added in an amount of 1.5—15 gram molecules per gram atom of multivalent metals present in the hexafluorosilicic acid.

The application of aminopolycarboxylic acids and alkali metal salts for sequestration of multivalent metals in solution is known as such. It is also known, however, that the resultant complexes with these metals decompose in acid environments, so that these compounds, which are called sequestering, chelating or complexing agents, are applied practically only in neutral and basic environments. It has now been found that when the aminopolycarboxylic acids are added to the highly acid hexafluorosilicic acid, after ammoniation thereof a silica precipitate is obtained which has a substantially lower heavy metals content than a silica obtained in a similar conversion in which the aminopolycarboxylic acid is added to the wholly or partly neutralized hexafluorosilicic acid solution.

In the process according to the invention the concentration of the hexafluorosilicic acid solution used is at most 15 wt.-%. The concentration of the ammonium hydroxide solution, as well as the amounts used of the reactants and the temperature applied, may be varied within wide limits. For instance, use is made of a hexafluorosilicic acid solution having a concentration of at most 15 wt.-%, an $NH_4OH$ solution having a concentration of 15—35 wt.-%, and a temperature of between 24 to 45 °C, as is described in the European patent application 94.138.

From the reaction mixture formed in the conversion, which consists mainly of an ammonium fluoride solution with solid silica, the silica is separated, for instance by filtration, decantation or centrifugation. The separated product can, if desired, be further processed in a known way, for instance by washing and/or calcining. The product consists practically quantitatively of silica and is suitable, for instance, for use as catalyst support or as substitute of, for instance, iota quartz or mountain crystal.

The reaction liquid remaining after separation of silica, which consists mainly of an ammonium fluoride solution, may be upgraded, for instance by concentrating it, into technical-grade ammonium fluoride, or it may be converted, in for instance, alkali metal fluorides, aluminum fluorides or hydrofluoric acid. It has been found that the metals present are fully complexed and may be regarded as inert when, or instance, the solution is discharged or processed.

The invention will be elucidated in the following examples, without being restricted thereto.

### Example I

An amount of 0.5 l of an $H_2SiF_6$ solution with a concentration of about 10 wt.-% was introduced into a 3-litre reaction vessel equipped with an agitator and a cooler. This solution had been prepared by diluting a raw, approx. 29.5 wt.-% $H_2SiF_6$ solution, obtained by washing Si and F containing off-gases from a phosphoric acid plant, with water. While the solution was being stirred at a stirring speed of 200 revolutions per minute, 0.84 g solid 1,2-disodiumethylene diaminotetra-acetic acid was added to it, the temperature meanwhile being maintained at about 32°C. While stirring was continued and the temperature was kept constant, a 25 wt.-% ammonium hydroxide solution was injected just subcutaneous of the liquid surface, the metering rate being 16.25 cm³ $NH_4OH$ solution per minute. Metering was continued until the pH in the reaction mixture was approximately 9.0.

The reaction mixture was subsequently filtered through a polypropylene filter; the filter cake thus obtained (2 g/minute) was washed with distilled water and subsequently air-dried at 120°C.

The product was analysed using atom spectrometry. The results are summarized in Table I.

## Example II

The process of Example I was repeated, but now 0.17 g solid 1,2-disodiumethylene diaminotetra-acetic acid was added. The analytical results are also summarized in Table I.

## Comparative example A

The process of Example I was repeated, but now no 1,2-disodiumethylene diaminotetra-acetic acid was added. The analytical results are also summarized in Table I.

### Table I

|  | Comparative example A | Example II | Example I |
|---|---|---|---|
| Sodium | 40 ppm | 23 ppm | 14 ppm |
| Potassium | 30 ppm | 8 ppm | 4 ppm |
| Lithium | 0.1 ppm | < 0.1 ppm | < 0.1 ppm |
| Copper | 3 ppm | 2 ppm | < 2 ppm |
| Iron | 30 ppm | 22 ppm | 2 ppm |
| Nickel | 4 ppm | < 1 ppm | < 1 ppm |
| Calcium | 600 ppm | 14 ppm | 3 ppm |
| Magnesium | 30 ppm | 2 ppm | 2 ppm |
| Aluminium | 15 ppm | 14 ppm | 4 ppm |
| Phosphorus | 50 ppm | < 10 ppm | < 10 ppm |

## Comparative example B

The process of Example I was repeated, but now the 1,2-disodiumethylene diaminotetra-acetic acid was added to the neutralized reaction mixture of pH 9.0. On analysis it was found that the metal content of the silica obtained was substantially higher than in Example I. In particular the concentrations of iron, aluminium, calcium and magnesium were only slightly lower than in the blank test of comparative example A.

## Example III

The process of Example I was repeated, but now the filtered product, after having been washed with water, was four times washed with a 16 wt.-% $HNO_3$ solution at about 80°C and was subsequently afterwashed with distilled water and dried at 120°C. On analysis it was found that the Na content had dropped to 2 ppm, the Ca content to < 1 ppm, the Mg content to about 1 ppm and the Al content to < 1 ppm. The other results were virtually the same as those of Example I.

**Claims:**

1. Process for the preparation of pure silica by converting a solution of hexafluorosilicic acid having a concentration of at most 15 wt.-%, with an ammonium hydroxide solution and separating the silica precipitate formed, characterized in that a small amount of an aminopolycarboxylic acid or a salt thereof is added to the hexafluorosilicic acid solution prior to contacting the latter with the ammonium hydroxide solution.

2. Process according to claim 1, characterized in that ethylene diaminotetra-acetic acid or an alkali metal salt thereof is added to the hexafluorosilicic acid solution.

3. Process according to claim 1 or 2, characterized in that 1,2-disodium salt of ethylene diaminotetra-acetic acid is added.

4. Process according to any of claims 1—3, characterized in that the aminopolycarboxylic acid or salt thereof is added in an amount of 1.5—15 gram molecule per gram atom of multivalent metals present in the hexafluorosilicic acid.

5. Process according to any of claims 1—4, characterized in that the aminopolycarboxylic acid or a salt thereof is added in solid form.

**Patentansprüche**

1. Verfahren zur Herstellung von reiner Kieselsäure durch Umsetzen einer Lösung von Hexafluorokieselsäure einer Konzentration von höchstens 15 Gew.-% mit einer Ammoniumhydroxidlösung und Abtrennen des gebildeten Kieselsäureniederschlags, dadurch gekennzeichnet, daß eine geringe Menge einer Aminopolycarbonsäure oder eines Salzes davon zur Hexafluorokieselsäure Inberührungbringen mit der Ammoniumhydroxidlösung zugefügt wird.

# 0 113 137

2. Verfahren nach Anspruch 1, dadurch gekennzeichnet, daß Ethylendiamintetraessigsäure oder ein Alkalimetallsalz davon zur Hexafluorokieselsäurelösung zugegeben wird.

3. Verfahren nach Anspruch 1 oder 2, dadurch gekennzeichnet, daß das 1,3-Dinatriumsalz der Ethylendiamintetraessigsäure zugegeben wird.

4. Verfahren nach einem der Ansprüche 1 bis 3, dadurch gekennzeichnet, daß die Aminopolycarbonsäure oder deren Salz in einer Menge von 1,5 bis 15 Mol je Grammatom in der Hexafluorokieselsäure vorhandener mehrwertiger Metalle zugegeben wird.

5. Verfahren nach einem der Ansprüche 1 bis 4, dadurch gekennzeichnet, daß die Aminopolycarbonsäure oder deren Salz in fester Form zugegeben wird.

**Revendications**

1. Procédé de préparation de silice pure par conversion d'une solution d'acide hexafluorosilicique ayant une concentration ne dépassant pas 15 % end poids avec une solution d'hydroxyde d'ammonium et la séparation du précipité de silice formé, caractérisé en ce qu'on ajoute une petite quantité d'un acide aminopolycarboxylique ou un sel de celui-ci à la solution d'acide hexafluorosilicique avant le contact de ce dernier avec la solution d'hydroxyde d'ammonium.

2. Procédé selon la revendication 1, caractérisé en ce qu'on ajoute l'acide éthylènediaminotétraacétique ou un sel de métal alcalin de celui-ci à la solution d'acide hexafluorosilicique.

3. Procédé selon la revendication 1 ou 2, caractérisé en ce qu'on ajoute un sel 1,2-disodique d'acide éthylène-diaminotétraacétique.

4. Procédé selon l'une quelconque des revendications 1 à 3, caractérisé en ce qu'on ajoute l'acide aminopolycarboxylique ou un sel de celui-ci en une quantité de 1,5 à 15 molécules-g par atome-g de métaux polyvalents présents dans l'acide hexafluorosilicique.

5. Procédé selon l'une quelconque des revendications 1 à 4, caractérisé en ce qu'on ajoute l'acide aminopolycarboxylique ou son sel sous forme solide.

4